# EUROPÄISCHE PATENTSCHRIFT

(11) **EP 0 616 738 B1**
(45) Veröffentlichungstag und Bekanntmachung des Hinweises auf die Patenterteilung: **27.09.1995**
(21) Anmeldenummer: 92923592.7
(22) Anmeldetag: 25.11.1992
(51) Int. Cl.: H02K 3/12, H02K 3/24

(54) **LÄUFERWICKLUNG FÜR EINE ELEKTRISCHE MASCHINE**
ROTOR WINDING FOR AN ELECTRIC MOTOR
ENROULEMENT ROTORIQUE DE MOTEUR ELECTRIQUE

(30) Priorität: 11.12.1991 AT 2461/91
(43) Veröffentlichungstag der Anmeldung: 28.09.1994
(73) Patentinhaber: ELIN ENERGIEVERSORGUNG GESELLSCHAFT m.b.H., 1141 Wien (AT)
(72) Erfinder: SCHEIDL, Walter, A-8160 Weiz (AT)
(74) Vertreter: Rieberer, Stefan, Dipl.-Ing.
(86) Internationale Anmeldenummer: AT9200153
(87) Internationale Veröffentlichungsnummer: WO9312571

(56) Entgegenhaltungen:
- DE-A- 1 613 089
- DE-B- 1 121 204
- FR-A- 828 119
- GB-A- 901 672
- US-A- 2 575 932
- PATENT ABSTRACTS OF JAPAN vol. 5, no. 44 (E-50)(716) 24. März 1981 & JP-A-55 166 472

## Beschreibung

Die Erfindung betrifft eine Läuferwicklung für eine elektrische Maschine, insbesondere für einen Turbogenerator, die aus mehreren Spulen besteht, wobei die einzelnen Spulen aus mehreren hintereinander geschalteten Windungen, welche sich vorzugsweise aus zwei Halbwindungen bzw. Wicklungsstäben zusammensetzen, aufgebaut ist und die wicklungsstäbe in den Längsnuten des Läufers angeordnet sind und jede Längsnut radial nach außen durch einen Nutenverschlußkeil abgeschlossen ist.

Derartige Läuferwicklungen sind bekannt. Der Läufer ist dabei vorwiegend ein einteiliges, massives Stück, das aus einem im Vakuumguß hergestellten Block geschmiedet ist. Im Läuferballen sind die Längsnuten eingefräst, die die Läuferwicklung aufnehmen.

Durch die Gesamtkonzeption des Läufers ist es aufgrund der begrenzten Wärmeabfuhr zu unterschiedlichsten Längenänderungen gekommen. So wird versucht, die Kühlung zu verbessern, wobei jedoch die konstruktiven Grenzen nicht überschreitbar sind. Darüberhinaus wurde auch zur Erhöhung der thermischen Standfestigkeit das Läuferwicklungsprofil aus silberlegiertem Kupfer hergestellt.

Trotz dieser Maßnahmen hat es jedoch aufgrund der Wärmespannungen zur Zerstörung der Wicklung kommen können. Insbesondere ist es bei kurzzeitigen Überlastungen der elektrischen Maschine zu unterschiedlichsten Schrumpfungen der Wicklungsstäbe in den einzelnen Nuten gekommen.

Aus der US-PS 2575.932 ist es bekannt, die außenliegenden Spulen in Umfangsrichtung zu verbreitern. Die Höhe der Spulen ist jedoch konstant.

Diese bekannte Wicklung besteht auch aus einem Aluminium-Teil und einem Kupfer-Teil, wobei diese beiden Teile miteinander verschweißt sind. Diese Konstruktion wurde aus Gründen der Fliehkraft gewählt. Das leichtere Aluminium wird für die oberen Lagen gewählt und der Kupferteil ist im Nutteil des Rotorkörpers vorgesehen. Im Wickelkopfbereich wird der gleiche Querschnitt über alle Windungen, die aus Aluminium gefertigt sind, vorgesehen. Die im Umfangsrichtung breitere Nut bedarf eines größeren Bearbeitungsaufwandes.

Die Vergrößerung des Aluminiumquerschnittes muß aufgrund der Leitfähigkeit erfolgen. Die Fliehkraftwerte werden aber zweifellos verbessert.

In der GB-PS 901 672 ist ein speziell konstruierter Leiter beschrieben, der im Einströmungsbereich einen Kühlkanal aufweist.

Aus der JP-A 55 166 472 ist eine Träufel-Wicklung bekannt, die vorwiegend bei Niederspannungsmaschinen zum Einsatz kommen.

Ferner ist aus der FR-PS 828 119 eine Wicklung bekannt, die im Bereich der Nutenverschlußkeile in Umfangsrichtung breiter ist.

Aufgabe der Erfindung ist es daher, eine Läuferwicklung der eingangs zitierten Art zu schaffen, die einerseits die oben aufgezeigten Nachteile vermeidet und die anderseits eine höhere Stabilität in Hinblick auf thermisches und mechanisches Verhalten aufweist.

Die erfindungsgemäße Läuferwicklung ist dadurch gekennzeichnet, daß die radiale Höhe mindestens des dem Nutenverschlußkeil nächstliegenden Wicklungsstabes größer ist als die radiale Höhe der übrigen in der Längsnut vorgesehenen Wicklungsstäbe.

Mit der Erfindung ist es erstmals möglich, die normal schlechte Kühlung der elektrischen Maschine und die damit verbundene kleine Wärmeabfuhr aus dem Läufer durch die wesentlich bessere mechanische Stabilität der Wicklung zu kompensieren. Dies ist vor allem darauf zurückzuführen, daß durch die Erhöhung der radialen Höhe des Wicklungsstabes die Stromdichte im gleichen Ausmaß reduziert wird. Ferner erfolgt die Erhöhung aus thermischen Gründen, da diese Windungen aufgrund der Temperaturschwankungen größten Beanspruchungen ausgesetzt sind. Durch die thermische Belastung werden mechanische Spannungen induziert, die eine verringerte Stabilität dieses Wicklungsteiles hervorrufen. So könnten die relativen Dehnungen der obersten Wicklung zu Rotorballen und Wicklungskappen zu Wicklungsschäden führen. Durch die Erhöhung der radialen Höhe, der in Rede stehenden Spulen, ist das Temperaturniveau und damit die Dehnungen beherrschbar.

Nach einer besonderen Ausgestaltung der Erfindung beträgt der Faktor für die Erhöhung der radialen Höhe des Wicklungsstabes 1,2 bis 3, vorzugsweise 1,8 bis 2,2. Wird nun der Querschnitt annähernd um das Doppelte vergrößert und es werden die beiden dem Nutenverschlußkeil am nächsten liegenden Wicklungsstäbe derart ausgeführt, so reduzieren sich praktisch für diese beiden Windungen die Verluste auf die Hälfte. Diese beträchtlich geringe Erwärmung führt zu einer Vergleichmäßigung des Wärmebildes in der Nut des Läufers.

Mit der Erfindung wird also einerseits eine höhere mechanische Stabilität und andererseits ein wesentlich besseres thermisches Verhalten der Wicklung erreicht.

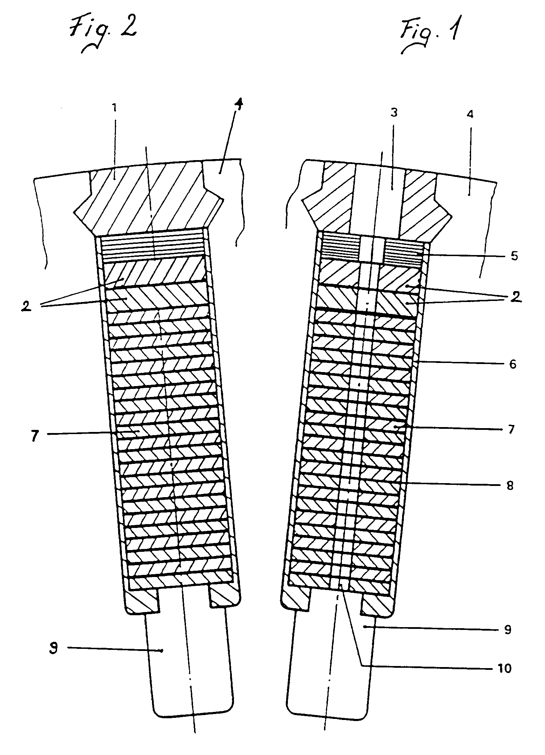

Anhand eines in der Zeichnung dargestellten Ausführungsbeispieles wird die Erfindung näher erläutert. Fig. 1 bzw. 2 zeigt einen Schnitt durch die Längsnut des Läufers eines Turbogenerators.

Gemäß der Fig. 1 weist der Läufer 4 Längsnuten 9 auf. Jede dieser Längsnuten 9 ist mit einer Wandisolierung 6 versehen. In die isolierte Längsnut 9 werden die einzelnen Windungsstäbe 7 angeordnet.

Die einzelnen Windungsstäbe 7 sind durch Zwischenlagen 8 gegeneinander isoliert. Radial nach außen wird die Längssnut 9 mit einer Nutkopf-Einlage 5 und dem Nutenverschlußkeil 1 abgeschlossen. Die dem Nutenverschlußkeil 1 bzw. der Nutkopf-Einlage 5 nächstliegenden Windungsstäbe 2 weisen den doppelten Querschnitt auf wie die Windungsstäbe 7. Um trotzdem eine bessere Kühlung der Wicklung zu erreichen, weisen die Windungsstäbe 2 bzw. 7 Kühlschlitze 10 auf. Die Kühlluft tritt dann im Kühlluftaustrittskanal 3 des Nutenverschlußkeiles 1 in den Luftspalt der Maschine ein.

Gemäß der Fig. 2 weist der Läufer 4 die Längsnuten 9 auf. Die in der isolierten Längsnut 9 angeordneten Windungsstäbe 7 sind aus massivem silberlegierten Kupfer hergestellt. Die Längsnut 9 ist radial nach außen mit dem Nutenverschlußkeil 1 abgeschlossen. Die diesem Nutenverschlußkeil 1 nächstliegenden Windungsstäbe 2 weisen einen größeren Querschnitt als die Windungsstäbe 7 auf.

## Patentansprüche

1. Läuferwicklung für eine elektrische Maschine, insbesondere für einen Turbogenerator, die aus mehreren Spulen besteht, wobei die einzelnen Spulen aus mehreren, hintereinander geschalteten Windungen, welche sich vorzugsweise aus zwei Halbwindungen bzw. Wicklungsstäben (7) zusammensetzen, aufgebaut ist und die Wicklungsstäbe (7) in den Längsnuten des Läufers (1) angeordnet sind und jede Länasnut (9) radial nach außen durch einen Nutenverschluß (1) abgeschlossen ist, **dadurch gekennzeichnet,** daß die radiale Höhe mindestens des dem Nutenverschlußkeil (1) nächstliegenden Wicklungsstabes (2) größer ist als die radiale Höhe der übrigen, in der Längsnut (9) vorgesehenen Wicklungsstäbe (7).

2. Läuferwicklung nach Anspruch 1, **dadurch gekennzeichnet,** daß der Faktor für die Erhöhung der radialen Höhe des Wicklungsstabes (2) 1,2 bis 3, vorzugsweise 1,8 bis 2,2 beträgt.

## Claims

1. Rotor winding for an electrical machine, in particular for a turbo generator, which rotor winding consists of several coils, the individual coils being constructed from several windings connected in series, these windings being preferably composed of two half windings or winding bars (7), and the winding bars being arranged in the longitudinal slots of the rotor (1) and each longitudinal slot (9) being closed externally in the radial direction by a slot wedge (1), **characterised in that** the radial height, at least of the winding bar (2) adjacent to the slot wedge (1), is greater than the radial height of the remaining winding bars (7) provided in the longitudinal slot (9).

2. Rotor winding according to Claim 1, **characterised in that** the factor for the increase in the radial height of the winding bar (2) is 1.2 to 3, preferably 1.8 to 2.2.

## Revendications

1. Bobinage de rotor pour une machine électrique, en particulier pour un turbogénérateur, constitué de plusieurs bobines, les différentes bobines étant construites à partir de plusieurs enroulements branchés les uns derrière les autres, se composant de préférence de deux demi-enroulements ou barres d'enroulement (7), et les barres d'enroulement (7) étant disposées dans les rainures longitudinales du rotor (1) et chaque rainure longitudinale (9) étant obturée radialement vers l'extérieur au moyen d'un élément cunéiforme d'obturation de rainure (1), caractérisé en ce que la hauteur radiale d'au moins la barre d'enroulement (2) située la plus près de l'élément cunéiforme d'obturation de rainure (1) est supérieure à la hauteur radiale des autres barres d'enroulement (7) prévues dans la rainure longitudinale (9).

2. Bobinage de rotor selon la revendication 1, caractérisé en ce que le facteur d'augmentation de la hauteur radiale de la barre d'enroulement (2) et de 1,2 à 3, de préférence de 1,8 à 2,2.
